# EUROPEAN PATENT APPLICATION

(11) **EP 4 826 843 A1**
(43) Date of publication of application: **21.10.2026**
(21) Application number: 25797074.9
(22) Date of filing: 21.02.2025
(51) Int. Cl.: H01M 10/613

(54) **REFRIGERANT HEAT EXCHANGE COMPONENT, BATTERY DEVICE, AND ELECTRIC DEVICE**

(30) Priority: 28.04.2024 CN 202420907842 U
(71) Applicant: Contemporary Amperex Technology Co., Limited, Ningde, Fujian 352100 (CN)
(72) Inventor: GAO, Bang, Ningde, Fujian 352100 (CN); HOU, Yuepan, Ningde, Fujian 352100 (CN); LI, Xingxing, Ningde, Fujian 352100 (CN); HUANG, Xiaoteng, Ningde, Fujian 352100 (CN)
(74) Representative: Kraus & Lederer PartGmbB
(86) International application number: PCT/CN2025/078590
(87) International publication number: WO 2025/227896

(57) **Abstract**

The present application is applicable to the technical field of batteries, and proposes a refrigerant heat exchange component, a battery apparatus, and an electrical apparatus. The battery apparatus (100) includes: a box; a battery cell assembly (20) disposed within the box (10); and a refrigerant heat exchange component (30), the refrigerant heat exchange component (30) at least including a first plate body (31) and a second plate body (32) arranged in a stack, where the first plate body (31) and the second plate body (32) enclose a refrigerant heat exchange flow channel (34), the first plate body (31) has a welding portion (312) and a material accommodating space (301) is provided in the welding portion (312), the material accommodating space (301) being disposed adjacent to the refrigerant heat exchange flow channel (34), the material accommodating space (301) having an opening facing the second plate body (32), and the second plate body (32) being weldedly connected to the welding portion (312). The battery apparatus and the electrical apparatus according to the embodiments of the present application have relatively high reliability.

## Description

The present application claims priority to Chinese Patent Application No. 202420907842.4, filed with the China National Intellectual Property Administration on April 28, 2024, and entitled "HEAT EXCHANGE APPARATUS, BATTERY, AND ELECTRICAL APPARATUS", the entire contents of which are incorporated herein by reference.

### TECHNICAL FIELD

The present application relates to the technical field of batteries, and in particular, to a refrigerant heat exchange component, a battery apparatus, and an electrical apparatus.

### BACKGROUND

In recent years, new energy vehicles have made significant advancements. In the field of electric vehicles, batteries, as the sources of power for electric vehicles, play an irreplaceable and important role. As a core component of new energy vehicles, batteries have relatively high requirements in terms of reliability.

### SUMMARY OF THE INVENTION

In view of this, embodiments of the present application provide a refrigerant heat exchange component, a battery apparatus, and an electrical apparatus, which have relatively high reliability.

Embodiments of the first aspect of the present application proposes a battery apparatus, including: a box; a battery cell assembly disposed within the box; and a refrigerant heat exchange component, the refrigerant heat exchange component being configured to perform heat exchange with the battery cell assembly, and the refrigerant heat exchange component at least including a first plate body and a second plate body arranged in a stack, where the first plate body and the second plate body enclose a refrigerant heat exchange flow channel, the first plate body has a welding portion, the second plate body is weldedly connected to the welding portion, and a material accommodating space is provided in the welding portion, the material accommodating space having an opening facing the second plate body, and the material accommodating space being disposed adjacent to the refrigerant heat exchange flow channel to block the solder from flowing toward the interior of the refrigerant heat exchange flow channel.

The battery apparatus according to the embodiments of the present application includes the box, the battery cell assembly, and the refrigerant heat exchange component, and the refrigerant heat exchange component has the refrigerant heat exchange flow channel formed therein to perform thermal management on the battery cell assembly, thereby improving the reliability of battery operation. The refrigerant heat exchange component at least includes the first plate body and the second plate body, and the material accommodating space is provided in the welding portion of the first plate body and the opening of the material accommodating space faces the second plate body. By providing the material accommodating space, the contact area between the first plate body and the second plate body is reduced, and the welding area is correspondingly reduced; meanwhile, the material accommodating space blocks a path of the solder moving toward the refrigerant heat exchange flow channel, and the material accommodating space can further store excess solder. Therefore, the solution according to the embodiments of the present application reduces the occurrence of the problem of blockage caused by the solder flowing into the refrigerant heat exchange flow channel, thereby reducing the risk of functional abnormality of the refrigerant heat exchange component and failure of thermal management of the battery due to blockage of the refrigerant heat exchange flow channel, improving the reliability of the battery apparatus, improving the welding yield of the refrigerant heat exchange component, and reducing the cost of the refrigerant heat exchange component.

In some embodiments, the welding portion includes a plurality of connection regions arranged at intervals, the material accommodating space being provided in at least one of the connection regions; and at one side of the refrigerant heat exchange flow channel, the material accommodating space divides the connection region into a first region and a second region distributed along a preset direction, where the first region is located between the refrigerant heat exchange flow channel and the material accommodating space, and the material accommodating space is used for blocking the solder from flowing from the second region to the first region.

By adopting the aforementioned technical solution, the material accommodating space can block the solder in the second region from flowing toward the first region, so as to protect the refrigerant heat exchange flow channel.

In some embodiments, along the preset direction, a width of the first region is less than or equal to a width of the second region.

By adopting the aforementioned technical solution, a distance between the material accommodating space and a portion of the refrigerant heat exchange flow channel adjacent thereto is less than or equal to a distance from the material accommodating space to a side of the connection region away from that portion of the refrigerant heat exchange flow channel, which makes the distance between the material accommodating space and the refrigerant heat exchange flow channel relatively short, thereby providing relatively good anti-blockage effects.

In some embodiments, a surface of the first plate body facing the second plate body is recessed to provide a flow channel portion, and the flow channel portion and the second plate body enclose the refrigerant heat exchange flow channel.

By adopting the aforementioned technical solution, both the material accommodating space and the flow channel portion are fabricated on the first plate body, and the second plate body can be a flat-plate structure, such that the manufacturing method of the refrigerant heat exchange component is simple and convenient, with relatively high manufacturing efficiency.

In some embodiments, there is a preset distance between the material accommodating space and a portion of the refrigerant heat exchange flow channel disposed adjacent thereto, the preset distance being less than or equal to 35 mm.

In the embodiments of the present application, the preset distance between the refrigerant heat exchange flow channel and the material accommodating space is set to be less than or equal to 35 mm, which can effectively reduce the risk of blockage of the refrigerant heat exchange flow channel.

In some embodiments, the preset distance ranges from 5 mm to 20 mm.

By setting the preset distance to be greater than or equal to 5 mm, the risk of direct communication between the gas accommodating space and the refrigerant heat exchange flow channel is reduced, and the manufacturing difficulty of the refrigerant heat exchange component is reduced; and by setting the preset distance to be less than or equal to 20 mm, the risk of weld blockage can be better reduced.

In some embodiments, a material accommodating groove is provided in the welding portion, with the interior of the material accommodating groove forming the material accommodating space.

By providing the material accommodating groove in the welding portion of the first plate body, not only can the material accommodating groove be utilized to separate the refrigerant heat exchange flow channel from a welding region having a relatively large width, thereby reducing the risk of flow channel weld blockage, but also the material accommodating groove can be utilized to enhance the structural strength of the first plate body, thereby reducing the risk of damage to the first plate body caused by external forces.

In some embodiments, the material accommodating groove is in a strip shape, and the material accommodating groove extends along a portion of the refrigerant heat exchange flow channel adjacent thereto.

By adopting the aforementioned technical solution, the material accommodating groove can reduce the welding area of the welding portion, and the material accommodating groove extends along the refrigerant heat exchange flow channel, which at least reduces the risk of weld blockage of the refrigerant heat exchange flow channel within its length range, thereby providing relatively good anti-weld-blockage effects.

In some embodiments, a width of the material accommodating groove is 5 mm-20 mm, and/or a depth of the material accommodating groove is 2 mm-3 mm.

By adopting the aforementioned technical solution, the material accommodating groove can accommodate a relatively large amount of solder, and can prevent the refrigerant heat exchange component from being excessively thick and occupying too much space.

In some embodiments, a width of the refrigerant heat exchange flow channel is 5 mm-20 mm, and/or a depth of the refrigerant heat exchange flow channel is 2 mm-3 mm.

By setting the refrigerant heat exchange flow channel to meet the aforementioned conditions, the refrigerant heat exchange flow channel can to enabled to have a sufficient flow rate of refrigerant and an excessive working pressure will not occur.

In some embodiments, a through hole is provided in the welding portion, with the interior of the through hole forming the material accommodating space.

By providing the through hole in the welding portion, the through hole can separate the refrigerant heat exchange flow channel from a welding region having a relatively large welding width, and the through hole can accommodate and/or discharge excess solder, thereby further reducing the risk of weld blockage.

In some embodiments, the through hole is circular, and a hole diameter of the through hole is 3 mm-15 mm.

By adopting the aforementioned technical solution, the size of the through hole can adapt to the size of the refrigerant heat exchange component, and the through hole has relatively small influence on the structural strength of the refrigerant heat exchange component.

In some embodiments, at least one of the material accommodating groove and the through hole is provided in the welding portion, and the material accommodating space is formed in the material accommodating groove and/or the through hole.

By adopting the aforementioned technical solution, the refrigerant heat exchange component can be provided with the material accommodating groove and/or the through hole according to its installation requirements, dimensions and other conditions, and the material accommodating groove and the through hole can be used in combination to achieve the anti-weld-blockage effect.

In some embodiments, the first plate body has a flow channel region and a peripheral region disposed outside the flow channel region, the refrigerant heat exchange flow channel being located in the flow channel region, and the welding portion being disposed in both the flow channel region and the peripheral region; and the material accommodating space includes a first material accommodating space, the first material accommodating space being disposed in the peripheral region.

By adopting the aforementioned technical solution, the first material accommodating space is disposed in the peripheral region, which can separate a portion of the peripheral region having a relatively large welding width from the refrigerant heat exchange flow channel, thereby reducing the risk of weld blockage of the refrigerant heat exchange flow channel.

In some embodiments, along a length direction of the first plate body, the first material accommodating space is disposed at one side of the first plate body, with a distance from the first material accommodating space to the refrigerant heat exchange flow channel less than a distance from the first material accommodating space to an edge of the first plate body; and/or along a width direction of the first plate body, the first material accommodating space is disposed at one side of the first plate body, with a distance from the first material accommodating space to the refrigerant heat exchange flow channel less than a distance from the first material accommodating space to the edge of the first plate body.

By adopting the aforementioned technical solution, the distance between the first material accommodating space and the refrigerant heat exchange flow channel is relatively short, which can separate the refrigerant heat exchange flow channel from a region having a relatively large welding width at the periphery of the exchange plate, thereby providing relatively good anti-weld-blockage effects.

In some embodiments, the first material accommodating space extends along an edge of the flow channel region; and/or a plurality of the first material accommodating spaces are provided, the plurality of first material accommodating spaces being arranged along the edge of the flow channel region.

By adopting the aforementioned technical solution, the first material accommodating space can be arranged along the extending direction of the refrigerant heat exchange flow channel, so as to adapt to the length of the refrigerant heat exchange flow channel, thereby providing a relatively comprehensive anti-weld-blockage effect for the refrigerant heat exchange flow channel.

In some embodiments, the material accommodating space further includes one or more second material accommodating spaces, the second material accommodating spaces being disposed in the flow channel region.

By adopting the aforementioned technical solution, excess solder can be blocked from flowing toward the interior of the refrigerant heat exchange flow channel, which also achieves the anti-weld-blockage effect.

In some embodiments, the refrigerant heat exchange flow channel includes a plurality of branch flow channels arranged in parallel, the branch flow channels each including an inlet sub-branch flow channel, a return sub-branch flow channel, and a plurality of sub-flow channels connected between the inlet sub-branch flow channel and the return sub-branch flow channel, where the plurality of sub-flow channels are connected in sequence, and the sub-flow channels extend along a first direction and the plurality of sub-flow channels are arranged along a second direction, the second direction intersecting the first direction; and the inlet sub-branch flow channel and/or the return sub-branch flow channel is disposed adjacent to the second material accommodating space.

By providing the second material accommodating space disposed adjacent to the inlet sub-branch flow channel and the return sub-branch flow channel, a key portion of the refrigerant heat exchange flow channel can be protected preferentially, thereby improving the reliability of the refrigerant heat exchange component.

In some embodiments, a plurality of the second material accommodating spaces are provided between at least two adjacent inlet sub-branch flow channels; and/or a plurality of the second material accommodating spaces are provided between the inlet sub-branch flow channel and the return sub-branch flow channel.

By adopting the aforementioned technical solution, the refrigerant heat exchange component can be flexibly provided with a plurality of second material accommodating spaces to reduce the risk of weld blockage occurring in the inlet sub-branch flow channel and the return sub-branch flow channel, thereby improving the welding yield and reliability of the refrigerant heat exchange component.

In some embodiments, the refrigerant heat exchange flow channel further includes a main inlet flow channel and a main return flow channel, the main inlet flow channel being in communication with a plurality of the inlet sub-branch flow channels, and the main return flow channel being in communication with a plurality of the return sub-branch flow channels; and the main inlet flow channel and/or the main inlet flow channel is disposed adjacent to the second material accommodating space.

By adopting the aforementioned technical solution, the embodiments of the present application provide the second material accommodating space disposed adjacent to the main inlet flow channel and/or the main return flow channel, so as to reduce the risk of weld blockage occurring in the main inlet flow channel and/or the main return flow channel, thereby improving the welding yield and reliability of the refrigerant heat exchange component.

In some embodiments, the first plate body includes a body portion and a composite layer disposed on a surface of the body portion, the composite layer serving as solder for welding with the second plate body, and the material accommodating space being capable of accommodating the solder.

By adopting the aforementioned technical solution, the material accommodating space can accommodate a portion of excess solder, so as to block the solder from flowing toward the interior of the refrigerant heat exchange flow channel, thereby reducing the risk of weld blockage occurring in the refrigerant heat exchange flow channel.

In some embodiments, the box includes a box body and an upper cover, two ends of the box body being each provided with an opening, where the upper cover and the refrigerant heat exchange component respectively cover the openings at the two ends of the box body, and the refrigerant heat exchange component is bonded to the battery cell assembly by means of a thermally conductive adhesive.

By adopting the aforementioned technical solution, the refrigerant heat exchange component can directly exchange heat with the battery cell assembly, which provides a high heat exchange efficiency and a good heat exchange effect, thereby effectively improving the reliability of the battery apparatus.

In some embodiments, the refrigerant in the refrigerant heat exchange flow channel is a phase change working medium.

By adopting the aforementioned technical solution, the refrigerant heat exchange component can be a direct cooling plate, which has a relatively high requirement on welding performance. The refrigerant heat exchange component according to the embodiments of the present application is internally provided with the material accommodating space, which can greatly reduce the risk of welding blockage, thereby improving the manufacturing yield of the refrigerant heat exchange component.

Embodiments of a second aspect of the present application provide a refrigerant heat exchange component, the refrigerant heat exchange component at least including a first plate body and a second plate body arranged in a stack, where the first plate body and the second plate body enclose a refrigerant heat exchange flow channel, the first plate body has a welding portion, the second plate body is weldedly connected to the welding portion, and a material accommodating space is provided in the welding portion, the material accommodating space having an opening facing the second plate body, and the material accommodating space being disposed adjacent to the refrigerant heat exchange flow channel to block the solder from flowing toward the interior of the refrigerant heat exchange flow channel.

Embodiments of a third aspect of the present application propose an electrical apparatus, including the battery apparatus according to the first aspect or the refrigerant heat exchange component according to the second aspect, the battery apparatus being used for providing electric energy.

The aforementioned description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### BRIEF DESCRIPTION OF THE DRAWINGS

In order to more clearly illustrate the technical solutions in the embodiments of the present application, a brief introduction will be given below to the accompanying drawings required for use in the description of the embodiments or conventional technologies. Obviously, the accompanying drawings in the following description are merely some embodiments of the present application. For those of ordinary skill in the art, other accompanying drawings may further be obtained according to these accompanying drawings without exerting creative labor.
FIG. 1 is a schematic structural view of a vehicle according to an embodiment of the present application;
FIG. 2 is a schematic structural view of a battery apparatus according to an embodiment of the present application;
FIG. 3 is a three-dimensional exploded schematic view of a battery cell according to an embodiment of the present application;
FIG. 4 is a three-dimensional exploded view of a refrigerant heat exchange component according to an embodiment of the present application;
FIG. 5 is a schematic structural view of a first plate body according to an embodiment of the present application;
FIG. 6 is a partial enlarged view of portion A in FIG. 5;
FIG. 7 is a partial enlarged view of portion B in FIG. 5;
FIG. 8 is a cross-sectional schematic view of a partial structure of a refrigerant heat exchange component according to an embodiment of the present application;
FIG. 9 is a schematic structural view of a first plate body according to another embodiment of the present application;
FIG. 10 is a schematic structural view of a first plate body in a refrigerant heat exchange component according to yet another embodiment of the present application; and
FIG. 11 is a partial enlarged view of portion C in FIG. 10.

The meanings of the reference numerals in the drawings are as follows:
1000, vehicle; 100, battery apparatus; 200, controller; 300, motor; 10, box; 11, upper cover; 12, box body; 20, battery cell assembly; 21, battery cell; 211, case; 212, end cover; 213, electrode assembly; 214, electrode terminal; 215, pressure relief mechanism; 30, refrigerant heat exchange component; 301, material accommodating space; 3011, first material accommodating space; 3012, second material accommodating space; 31, first plate body; 31a, flow channel region; 31b, peripheral region; 311, flow channel portion; 312, welding portion; 3121, connection region; 31211, first region; 31212, second region; 3122, material accommodating groove; 3123, through hole; 313, body portion; 314, composite layer; 32, second plate body; 33, heat exchange connector; 34, refrigerant heat exchange flow channel; 341, branch flow channel; 3411, inlet sub-branch flow channel; 3412, return sub-branch flow channel; 3413, sub-flow channel; 342, main inlet flow channel; 343, main return flow channel; 40, bottom protection plate.

### DETAILED DESCRIPTION

Embodiments in technical solutions of the present application will be described in detail below in conjunction with the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the aforementioned accompanying drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more groups (including two).

In the description of the embodiments of the present application, unless otherwise explicitly specified and defined, the technical terms "mounting", "coupling", "connecting", "fixing" and the like should be interpreted in a broad sense, for example, they may be a fixed connection, or a detachable connection, or being integrated; may be a mechanical connection, or an electrical connection; may be a direct connection, or an indirect connection through an intermediate medium, and may be communication between interiors of two elements or an interaction relationship between two elements. For those of ordinary skill in the art, the specific meanings of the above-mentioned terms in the embodiments of the present application can be understood according to specific situations.

In the embodiments of the present application, the battery cell may be a secondary battery, where the secondary battery refers to a battery cell which can be continuously used after being discharged by activating active materials through charging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, etc., which is not limited in embodiments of the present application
The battery apparatus mentioned in the embodiments of the present application may include one or more battery cell assemblies for providing voltage and capacity. The battery cell assembly may include a plurality of battery cells, and the plurality of battery cells are connected in series, in parallel or in series-parallel through a busbar component.

In some embodiments, the battery cell assembly is generally formed by arranging a plurality of battery cells.

As an example, the battery cell assembly may be a battery module, and the battery module is formed by arranging and fixing a plurality of battery cells into an independent module. As an example, the battery module may be formed by bundling a plurality of battery cells with a strap.

In some embodiments, the battery apparatus may be a battery pack. The battery pack includes a box and one or more battery cell assemblies, the battery cell assemblies being accommodated in the box.

As an example, the battery cell assembly may be a battery module, and the battery cell assembly may be accommodated in the box by fixing the battery module in the box.

As an example, the battery cell assembly may also be accommodated in the box by directly fixing a plurality of battery cells to the box.

In recent years, new energy vehicles have made significant advancements. In the field of electric vehicles, batteries, as the sources of power for electric vehicles, play an irreplaceable and important role. As a core component of new energy vehicles, batteries have relatively high requirements in terms of reliability.

Fast charging is a mainstream solution for new energy vehicles to achieve rapid energy replenishment, and many challenges are encountered in the implementation process. A battery cell generates a large amount of heat during fast charging, which will cause the internal temperature of the battery to rise sharply, thereby affecting the use performance and service life of the battery, and affecting the reliability of the battery.

For this reason, some batteries are provided with a refrigerant heat exchange component for performing thermal management on the battery. The refrigerant heat exchange component includes two opposing plate bodies, and the two plate bodies are weldedly connected to together form a flow channel for a refrigerant to flow, and the refrigerant heat exchange component regulates the temperature inside the battery through the refrigerant. However, during the welding connection of the two plate bodies, if a welding area near the flow channel has a relatively large width and there is a relatively large amount of solder, it is easy for the solder to flow into the flow channel and cause blockage of the flow channel, which further causes functional abnormality of the refrigerant heat exchange component, affecting the thermal management effect of the battery and the reliability of battery operation.

Based on the above considerations, in order to improve the reliability of the battery, one or more embodiments of the present application provide a battery apparatus, including a box, a battery cell assembly and a refrigerant heat exchange component, the refrigerant heat exchange component including a first plate body and a second plate body arranged in a stack, where the first plate body and the second plate body enclose a refrigerant heat exchange flow channel, the first plate body has a welding portion and a material accommodating space is provided in the welding portion, the material accommodating space being disposed adjacent to the refrigerant heat exchange flow channel, the material accommodating space having an opening facing the second plate body, and the second plate body being weldedly connected to the welding portion.

In the aforementioned battery apparatus, the first plate body is weldedly connected to the second plate body, and the material accommodating space is provided in the welding portion of the first plate body and the opening of the material accommodating space faces the second plate body. By providing the material accommodating space, the contact area between the first plate body and the second plate body is reduced, and the welding area is correspondingly reduced; meanwhile, the material accommodating space blocks a path of the solder moving toward the refrigerant heat exchange flow channel, and the material accommodating space can further store excess solder. Therefore, the solution according to the embodiments of the present application reduces the occurrence of the problem of blockage caused by the solder flowing into the refrigerant heat exchange flow channel, thereby reducing the risk of functional abnormality of the refrigerant heat exchange component and failure of thermal management of the battery due to blockage of the refrigerant heat exchange flow channel, and improving the reliability of the battery apparatus.

The technical solutions described in the embodiments of the present application are all applicable to various electrical apparatuses using battery cells, for example, mobile phones, portable devices, notebook computers, electric bikes, electric toys, electric tools, vehicles, ships, spacecraft and the like, for example, spacecraft include airplanes, rockets, space shuttles, spaceships and the like. For convenience of description, the following embodiments are described by taking a vehicle as an example of an electrical apparatus in an embodiment of the present application.

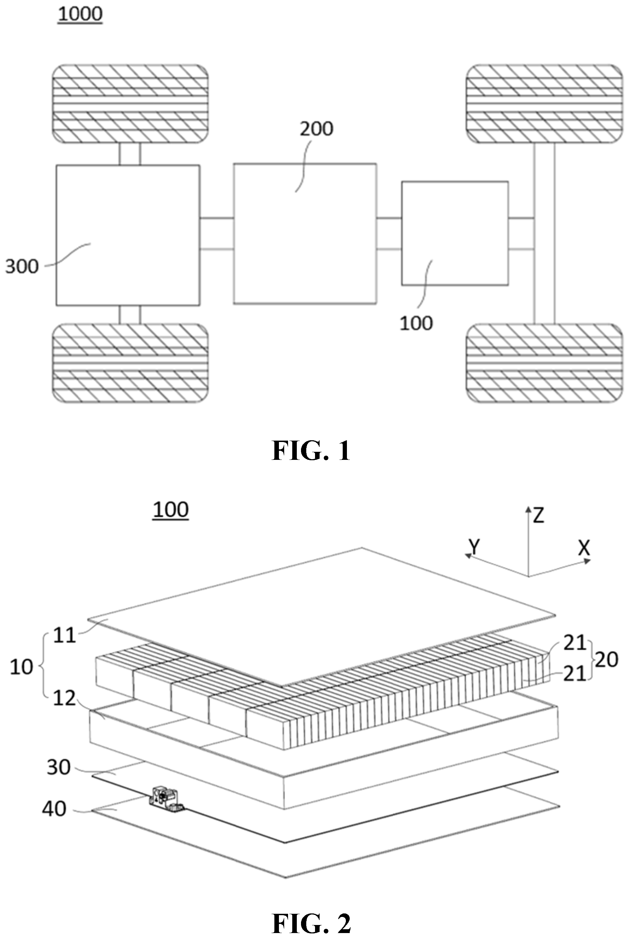

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid electric vehicle, an extended-range electric vehicle, or the like. A battery apparatus 100 is arranged in the vehicle 1000. The battery apparatus 100 may be arranged at the bottom, or head, or tail of the vehicle 1000. The battery apparatus 100 may be configured to supply power to the vehicle 1000. For example, the battery apparatus 100 may be used as an operating power source of the vehicle 1000. The vehicle 1000 may further include a controller 200 and a motor 300, where the controller 200 is used to control the battery apparatus 100 to supply power to the motor 300, for example, for the operating power demand when the vehicle 1000 is starting, navigating and driving.

In some embodiments of the present application, the battery apparatus 100 can not only be used as the operating power source for the vehicle 1000, but also as the driving power source for the vehicle 1000, to replace or partially replace fuel or natural gas to provide driving power for the vehicle 1000.

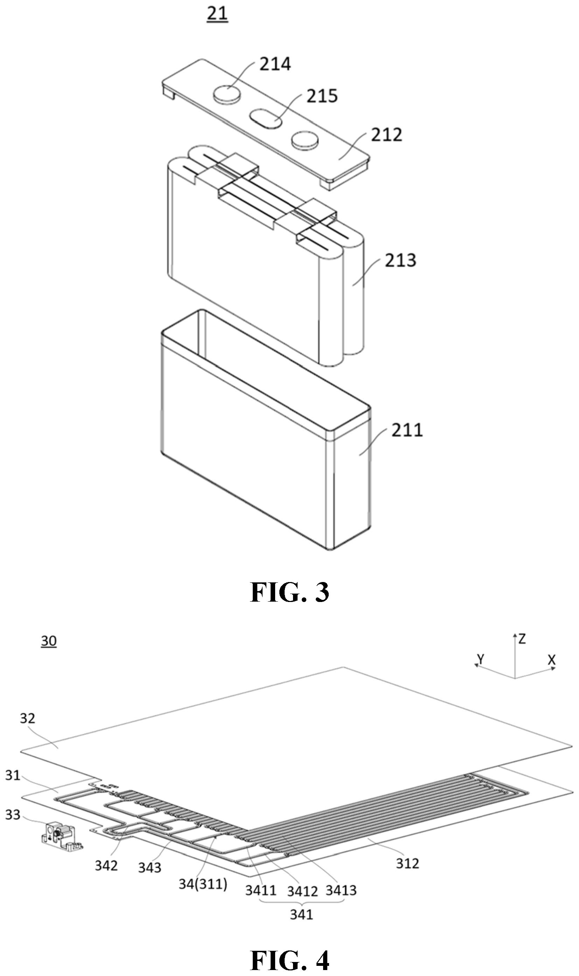

Referring to FIG. 2 and FIG. 3, a battery apparatus 100 includes a box 10 and a battery cell assembly 20. The box 10 includes an upper cover 11 and a box body 12, the upper cover 11 and the box body 12 covering each other, and the upper cover 11 and the box body 12 jointly defining an accommodating space for accommodating battery cells 21. The box body 12 may be a hollow structure with an opening at one end, the upper cover 11 may be a plate-like structure, and the upper cover 11 covers an opening side of the box body 12, such that the upper cover 11 and the box body 12 jointly define the accommodating space; the upper cover 11 and the box body 12 may also each be a hollow structure with an opening at one side, and the opening side of the upper cover 11 covers the opening side of the box body 12. Of course, the box 10 formed by the upper cover 11 and the box body 12 may be of various shapes, for example, a cylinder, a rectangular parallelepiped, etc.

The battery cell assembly 20 is generally formed by arranging a plurality of battery cells 21. The battery cell 21 is the smallest unit constituting the battery apparatus 100, and the battery cell 21 includes a case 211, an end cover 212, an electrode assembly 213 and other functional components.

The end cover 212 is a component that covers an opening of the case 211 to isolate an internal environment of the battery cell 21 from an external environment. Without limitation, the shape of the end cover 212 may be adapted to the shape of the case 211 to fit the case 211. Optionally, the end cover 212 may be made of a material having a certain hardness and strength (such as aluminum alloy). In this way, the end cover 212 is not easily deformed when subjected to extrusion or collision, such that the battery cell 21 can have higher structural strength, and the use reliability can also be improved. Functional components such as electrode terminals 214, a pressure relief mechanism 215 and the like may be provided on the end cover 212. The electrode terminals 214 may be used for electrical connection with the electrode assembly 213, for outputting or inputting electric energy of the battery cell 21. In some embodiments, the pressure relief mechanism 215 is used for releasing internal pressure when the internal pressure or temperature of the battery cell 21 reaches a threshold. The material of the end cover 212 may also be various, for example, copper, iron, aluminum, stainless steel, aluminum alloy, plastic, etc., which is not specifically limited in the embodiments of the present application. In some embodiments, an insulating member may further be provided on an inner side of the end cover 212, so as to reduce the risk of short circuit. As an example, the insulating member may be plastic, rubber, etc.

The case 211 is a component for cooperating with the end cover 212 to form the internal environment of the battery cell 21, where the formed internal environment may be used for accommodating the electrode assembly 213, an electrolyte solution and other components. The case 211 and the end cover 212 may be independent components, an opening may be provided on the case 211, and the end cover 212 covers the opening at the opening to form the internal environment of the battery cell 21. Without limitation, it is also possible to integrate the end cover 212 and the case 211. Specifically, the end cover 212 and the case 211 may first form a common connecting surface before other components are placed into the case, and when the interior of the case 211 needs to be encapsulated, the end cover 212 then covers the case 211. The case 211 may be of various shapes and various sizes, for example, a rectangular parallelepiped shape, a cylindrical shape, a hexagonal prism shape, etc. Specifically, the shape of the case 211 may be determined according to the specific shape and size of the electrode assembly 213. The material of the case 211 may be various, for example, copper, iron, aluminum, stainless steel, aluminum alloy, plastic, etc., and the embodiments of the present application do not impose any special limitation on this.

The electrode assembly 213 is a component in the battery cell 21 where electrochemical reactions occur. The case 211 may contain one or more electrode assemblies 213. The electrode assembly 213 is mainly formed by winding or stacking a positive electrode plate and a negative electrode plate, and a separator is generally provided between the positive electrode plate and the negative electrode plate. Portions of the positive electrode plate and the negative electrode plate having active materials constitute a main body portion of the electrode assembly 213, and portions of the positive electrode plate and the negative electrode plate not having active materials respectively constitute tabs. The positive tab and the negative tab may be both located at one end of the main body portion or respectively located at two ends of the main body portion. During the charge and discharge process of the battery apparatus 100, the positive electrode active material and the negative electrode active material react with the electrolyte solution, and the tabs are connected to the electrode terminals 214 to form a current loop. In some embodiments, a pressure relief mechanism 215 is provided at one side of the battery cell 21, and the pressure relief mechanism 215 refers to an element or component that is actuated to release internal pressure when the internal pressure or temperature of the battery cell 21 reaches a predetermined threshold.

Referring to FIG. 2 and FIGS. 4 to 6, embodiments of the first aspect of the present application proposes a battery apparatus 100, including a box 10, a battery cell assembly 20, and a refrigerant heat exchange component 30. The battery cell assembly 20 is disposed within the box 10, the refrigerant heat exchange component 30 is configured to perform heat exchange with the battery cell assembly 20, and the refrigerant heat exchange component 30 at least includes a first plate body 31 and a second plate body 32 arranged in a stack, where the first plate body 31 and the second plate body 32 enclose a refrigerant heat exchange flow channel 34, the first plate body 31 has a welding portion 312, the second plate body 32 is weldedly connected to the welding portion 312, and a material accommodating space 301 is provided in the welding portion 312, the material accommodating space 301 having an opening facing the second plate body 32, and the material accommodating space 301 being disposed adjacent to the refrigerant heat exchange flow channel 34 to block the solder from flowing toward the interior of the refrigerant heat exchange flow channel 34.

The box 10 is used for accommodating the battery cell assembly 20. By way of example, the box 10 includes an upper cover 11 and a box body 12, the upper cover 11 and the box body 12 enclosing an accommodating space.

The battery cell assembly 20 includes a plurality of battery cells 21. By way of example, the battery cell assembly 20 includes a plurality of battery cells 21 sequentially arranged along a first direction X, and a plurality of groups of battery cell assemblies 20 are sequentially arranged along a second direction Y, such that the battery cells 21 are arranged in an array, the second direction Y intersecting the first direction X. Optionally, the first direction X may be a length direction of the box 10, and the second direction Y may be a width direction of the box 10. In other embodiments, the first direction X and/or the second direction Y may also obliquely intersect the length direction of the box 10.

The refrigerant heat exchange component 30 is a component used for accommodating a refrigerant to regulate the temperature of the battery cell assembly 20. Heat is generated during the cycling process of the battery cell assembly 20, and the battery cell assembly 20 can be cooled by the refrigerant heat exchange component 30. The refrigerant heat exchange component 30 may also be referred to as a cooling member, a cooling system, a cooling plate, and the like. Of course, in some cases, the refrigerant heat exchange component 30 may also be used for heating the battery cell assembly 20, which will not be described in detail here.

The refrigerant heat exchange component 30 may be directly connected to the battery cell assembly 20, or may be indirectly connected to the battery cell assembly 20, as long as it can exchange heat with the battery cell assembly 20. In some embodiments, the refrigerant heat exchange component 30 is connected to a bottom of the box 10. By way of example, the box 10 includes an upper cover 11 and a box body 12, and the refrigerant heat exchange component 30 is connected to a side of the box body 12 facing away from the upper cover 11. The refrigerant heat exchange component 30 may be provided inside the box 10, outside the box 10, or serve as a lower cover that closes the box body 12, in which case two ends of the box body 12 are open, and the upper cover 11 and the refrigerant heat exchange component 30 respectively cover two sides of the box body 12.

The refrigerant heat exchange component 30 at least includes a first plate body 31 and a second plate body 32 arranged in a stack. The first plate body 31 and the second plate body 32 may have the same or similar dimensions, and the material of the first plate body 31 and the second plate body 32 may be metal, or may be a composite material or other materials.

The first plate body 31 and the second plate body 32 enclose a refrigerant heat exchange flow channel 34. By way of example, an unclosed flow channel portion 311 is machined on the first plate body 31, and after the first plate body 31 is connected to the second plate body 32, the flow channel portion 311 can be closed to form the refrigerant heat exchange flow channel 34. In other embodiments, an unclosed flow channel portion 311 may also be machined on the second plate body 32, or the first plate body 31 and the second plate body 32 may be provided with opposing flow channel portions 311.

The refrigerant heat exchange flow channel 34 is used for a refrigerant to flow. For example, the refrigerant may include a fluorine-containing cooling medium and the like. The refrigerant heat exchange flow channel 34 may be connected to other heat exchange devices such as a compressor, a water pump, a fan, a condenser and the like through pipelines, so that the refrigerant flows to the other heat exchange devices for cooling, and carries heat inside the battery out.

The first plate body 31 has a welding portion 312. The welding portion 312 refers to a portion on the first plate body 31 that is used for welding with the second plate body 32. By welding the welding portion 312 with the second plate body 32, the refrigerant heat exchange flow channel 34 can be sealed. It can be understood that the welding portion 312 at least includes a peripheral portion of the first plate body 31, and according to the shape of the refrigerant heat exchange flow channel 34, the welding portion 312 may further include portions between different flow channel portions of the refrigerant heat exchange flow channel 34.

A material accommodating space 301 is provided in the welding portion 312, the material accommodating space 301 has an opening facing the second plate body 32, and the material accommodating space 301 can be formed by structures such as a hole, a groove, etc. By providing the material accommodating space 301, the contact area between the first plate body 31 and the second plate body 32 is reduced, and the welding area of the welding portion 312 is also reduced. Meanwhile, since the material accommodating space 301 is disposed adjacent to the refrigerant heat exchange flow channel 34, the material accommodating space 301 can block the solder from moving toward the refrigerant heat exchange flow channel 34, and moreover, the material accommodating space 301 can further accommodate a portion of the solder, further reducing the risk of the solder flowing into the refrigerant heat exchange flow channel 34. Solder is a general term for metal alloy materials used to be added into a weld seam, a surfacing layer, and a brazed joint. In this embodiment, the solder is a welding material between the first plate body 31 and the second plate body 32, and the first plate body 31 and the second plate body 32 are fixedly connected by the solder. By way of example, the solder includes a material on a surface of the first plate body 31 and/or the second plate body 32. For example, the solder includes a composite layer on the surface of the first plate body 31 and/or the second plate body 32.

The battery apparatus 100 according to the embodiments of the present application includes the box 10, the battery cell assembly 20, and the refrigerant heat exchange component 30, and the refrigerant heat exchange component 30 has the refrigerant heat exchange flow channel 34 formed therein to perform thermal management on the battery cell assembly 20, thereby improving the reliability of battery operation 100. The refrigerant heat exchange component 30 includes the first plate body 31 and the second plate body 32, and the material accommodating space 301 is provided in the welding portion 312 of the first plate body 31 and the opening of the material accommodating space 301 faces the second plate body 32. By providing the material accommodating space 301, the contact area between the first plate body 31 and the second plate body 32 is reduced, and the welding area is correspondingly reduced; meanwhile, the material accommodating space 301 blocks a path of the solder moving toward the refrigerant heat exchange flow channel 34, and the material accommodating space 301 can further store excess solder. Therefore, the solution according to the embodiments of the present application reduces the occurrence of the problem of blockage caused by the solder flowing into the refrigerant heat exchange flow channel 34, thereby reducing the risk of functional abnormality of the refrigerant heat exchange component 30 and failure of thermal management of the battery apparatus 100 due to blockage of the refrigerant heat exchange flow channel 34, improving the reliability of the battery apparatus 100, improving the welding yield of the refrigerant heat exchange component 30, and reducing the cost of the refrigerant heat exchange component 30.

Referring to FIGS. 4-7, in some embodiments, the welding portion 312 includes a plurality of connection regions 3211 arranged at intervals, the material accommodating space 301 being provided in at least one of the connection regions 3211; and at one side of the refrigerant heat exchange flow channel 34, the material accommodating space 301 divides the connection region 3211 into a first region 32111 and a second region 32112 distributed along a preset direction, where the first region 32111 is located between the refrigerant heat exchange flow channel 34 and the material accommodating space 301, and the material accommodating space 301 is used for blocking the solder from flowing from the second region 32112 to the first region 32111.

Optionally, along the preset direction, a width of the first region 32111 is less than or equal to a width of the second region 32112.

The welding portion 312 includes a plurality of connection regions 3211 arranged at intervals, where each connection region 3211 is weldedly connected to the second plate body; and the refrigerant heat exchange flow channel 34 extends between adjacent connection regions 3211, and the material accommodating space 301 is provided in one or more connection regions 3211.

The "preset direction" is a direction in which the material accommodating space 301 divides the connection region 3211.

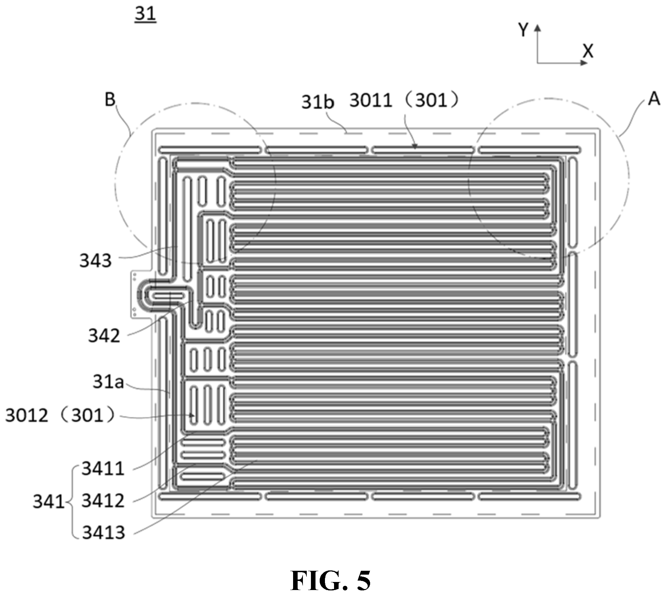

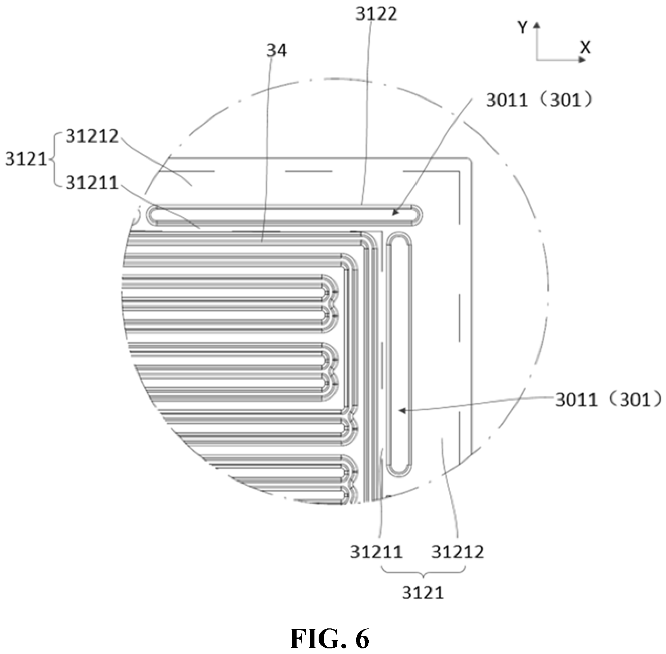

As shown in FIG. 5 and FIG. 6, by way of example, in the length direction (X direction) of the refrigerant heat exchange component 30, at one side of the refrigerant heat exchange flow channel 34, the material accommodating space 301 divides the connection region 3211 into a first region 32111 and a second region 32112 distributed along the length direction of the refrigerant heat exchange component 30, where the first region 32111 is located between the refrigerant heat exchange flow channel 34 and the material accommodating space 301. Optionally, along the length direction of the refrigerant heat exchange component 30, the width of the first region 32111 is less than or equal to the width of the second region 32112, i.e., the material accommodating space 301 is disposed adjacent to the refrigerant heat exchange flow channel 34. If the width of the first region 3211 is less than the width of the second region 32112, compared with an edge of the connection region 3211, the material accommodating space 301 is closer to the refrigerant heat exchange flow channel 34.

By way of example, in the width direction (Y direction) of the refrigerant heat exchange component 30, at one side of the refrigerant heat exchange flow channel 34, the material accommodating space 301 divides the connection region 3211 into a first region 32111 and a second region 32112 distributed along the width direction of the refrigerant heat exchange component 30, where the first region 32111 is located between the refrigerant heat exchange flow channel 34 and the material accommodating space 301, and the second region 32112 is located between the material accommodating space 301 and an edge of the refrigerant heat exchange component. Optionally, along the width direction of the refrigerant heat exchange component 30, the width of the first region 32111 is less than or equal to the width of the second region 32112, i.e., the material accommodating space 301 is disposed adjacent to the refrigerant heat exchange flow channel 34. If the width of the first region 3211 is less than the width of the second region 32112, compared with the edge of the connection region 3211, the material accommodating space 301 is closer to the refrigerant heat exchange flow channel 34.

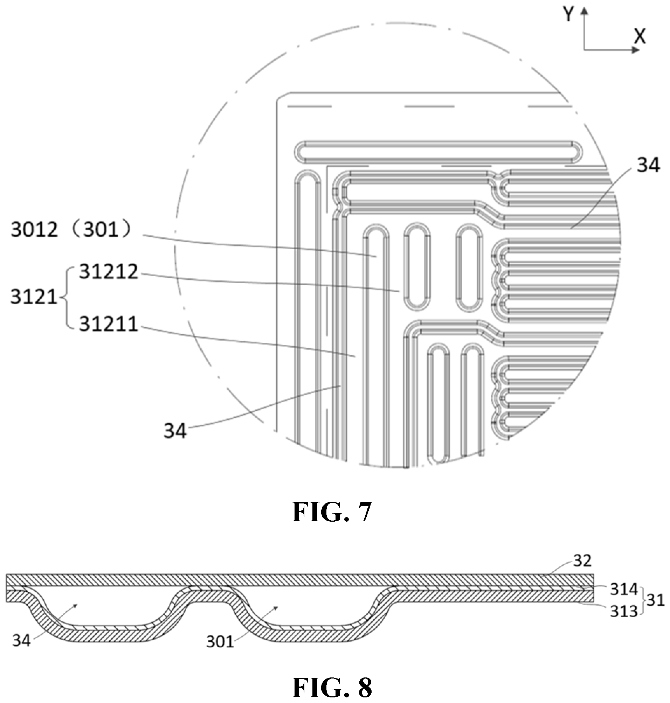

As shown in FIG. 5 and FIG. 7, the refrigerant heat exchange flow channel 34 may be arrangement in various manners, and the refrigerant heat exchange flow channel 34 forms a plurality of flow channel branches. In some embodiments, a connection region 3211 between adjacent flow channel branches is relatively wide, which increases the risk of weld blockage. Therefore, a material accommodating space 301 may also be provided in the connection region 3211 between the flow channel branches, and at one side of the refrigerant heat exchange flow channel 34, the material accommodating space 301 divides the connection region 3211 between the flow channel branches into a first region 32111 and a second region 32112. Optionally, along a direction perpendicular to the material accommodating space 301, the width of the first region 32111 is less than or equal to the width of the second region 32112.

By adopting the aforementioned technical solution, the material accommodating space 301 is disposed adjacent to the refrigerant heat exchange flow channel 34, and the material accommodating space 301 can block the solder in the second region 32112 from flowing toward the first region 32111, so as to protect the refrigerant heat exchange flow channel 34.

Optionally, along the preset direction, the width of the first region 32111 is less than or equal to the width of the second region 32112, a distance between the material accommodating space 301 and a portion of the refrigerant heat exchange flow channel 34 adjacent thereto is less than or equal to a distance from the material accommodating space 301 to a side of the connection region 3211 away from that portion of the refrigerant heat exchange flow channel 34, which can make the distance between the material accommodating space 301 and the refrigerant heat exchange flow channel 34 relatively small, thereby providing relatively good anti-blockage effects.

Referring to FIG. 4 and FIG. 5, a surface of the first plate body 31 facing the second plate body 32 is recessed to provide a flow channel portion 311, and the flow channel portion 311 and the second plate body 32 enclose the refrigerant heat exchange flow channel 34.

The flow channel portion 311 is recessed in the first plate body 31, and after the first plate body 31 and the second plate body 32 are weldedly connected, the flow channel portion 311 and the second plate body 32 together define the refrigerant heat exchange flow channel 34. The material accommodating space 301 is also provided in the first plate body 31, and the material accommodating space 301 and the flow channel portion 311 can be fabricated together on the first plate body 31, thereby improving the manufacturing efficiency. For example, the material accommodating space 301 and the flow channel portion 311 are fabricated on the first plate body 31 by means of stamping.

Optionally, the first plate body 31 is provided on a side of the second plate body 32 facing away from the battery cell assembly 20, and the second plate body 32 may be a flat plate, so as to facilitate fitting with and heat exchange with the battery cell assembly 20.

By adopting the aforementioned technical solution, both the material accommodating space 301 and the flow channel portion 311 are fabricated on the first plate body 31, and the second plate body 32 can be a flat-plate structure, such that the manufacturing method of the refrigerant heat exchange component 30 is simple and convenient, with relatively high manufacturing efficiency.

In other embodiments, the flow channel portion 311 and the material accommodating space 301 may be provided in either one of the first plate body 31 and the second plate body 32, or provided in both the first plate body 31 and the second plate body 32 simultaneously.

In some embodiments, there is a preset distance between the material accommodating space 301 and a portion of the refrigerant heat exchange flow channel 34 disposed adjacent thereto, the preset distance being less than or equal to 35 mm.

Since the function of the material accommodating space 301 is to prevent the refrigerant heat exchange flow channel 34 from being blocked, the embodiments of the present application set the preset distance between the material accommodating space 301 and the refrigerant heat exchange flow channel 34 to be less than or equal to 35 mm, so as to achieve a good anti-blockage effect. For example, the preset distance is 3 mm, 5 mm, 15 mm, 20 mm, 30 mm, 35 mm, etc.; when there are a plurality of material accommodating spaces 301, the distances between the material accommodating spaces 301 and the refrigerant heat exchange flow channel 34 may be unequal, as long as the above range is satisfied.

When a welding width at one side of the refrigerant heat exchange flow channel 34 is greater than 35 mm, the problem of weld blockage is prone to occur. In the embodiments of the present application, the preset distance between the refrigerant heat exchange flow channel 34 and the material accommodating space 301 is set to be less than or equal to 35 mm, which can effectively reduce the risk of blockage of the refrigerant heat exchange flow channel 34.

In some embodiments, the preset distance ranges from 5 mm to 20 mm. For example, the preset distance is 5 mm, 10 mm, 15 mm, 20 mm, etc. The preset distance between the material accommodating space 301 and the refrigerant heat exchange flow channel 34 may be determined according to factors such as a width of the refrigerant heat exchange flow channel 34, a welding area at one side of the refrigerant heat exchange flow channel 34, etc., so as to reduce the risk of weld blockage.

By setting the preset distance to be greater than or equal to 5 mm, the risk of direct communication between the gas accommodating space and the refrigerant heat exchange flow channel 34 is reduced, and the manufacturing difficulty of the refrigerant heat exchange component 30 is reduced; and by setting the preset distance to be less than or equal to 20 mm, the risk of weld blockage can be better reduced.

Referring to FIG. 4 to FIG. 8, in some embodiments, a material accommodating groove 3122 is provided in the welding portion 312, with the interior of the material accommodating groove 3122 forming the material accommodating space 301.

The material accommodating groove 3122 is recessed in the surface of the first plate body 31 facing the second plate body 32, the material accommodating groove 3122 may be in a strip shape, an arc shape or other shapes, and the material accommodating groove 3122 may also be provided in a profile-following manner with at least part of the refrigerant heat exchange flow channel 34, so that the material accommodating groove 3122 can serve as a false flow channel. The interior of the material accommodating groove 3122 forms the material accommodating space 301, and an opening of the material accommodating groove 3122 faces the second plate body 32, so as to accommodate excess solder between the first plate body 31 and the second plate body 32. In addition, the material accommodating groove 3122 may be fabricated by means of stamping or the like, which can not only accommodate the solder, but also improve the structural strength of the refrigerant heat exchange component 30.

By adopting the aforementioned technical solution, by providing the material accommodating groove 3122 in the welding portion 312 of the first plate body 31, not only can the material accommodating groove 3122 be utilized to separate the refrigerant heat exchange flow channel 34 from a welding region having a relatively large width, thereby reducing the risk of flow channel weld blockage, but also the material accommodating groove 3122 can be utilized to enhance the structural strength of the first plate body 31, thereby reducing the risk of damage to the first plate body 31 caused by external forces.

Referring to FIG. 5, in some embodiments, the material accommodating groove 3122 is in a strip shape, and the material accommodating groove 3122 extends along a portion of the refrigerant heat exchange flow channel 34 adjacent thereto.

The material accommodating groove 3122 is in a strip shape, i.e., a length dimension of the material accommodating groove 3122 is greater than a width dimension of the material accommodating groove 3122. The material accommodating groove 3122 extends along the refrigerant heat exchange flow channel 34, so that the material accommodating space 301 formed by the material accommodating groove 3122 also extends along the refrigerant heat exchange flow channel 34. As shown in FIG. 5, the number of material accommodating grooves 3122 is a plurality, the plurality of material accommodating grooves 3122 being all in a strip shape. At an outer side of the refrigerant heat exchange flow channel 34, each material accommodating groove 3122 extends along the refrigerant heat exchange flow channel 34 and the plurality of material accommodating grooves 3122 are arranged at intervals along the refrigerant heat exchange flow channel 34, reducing the risk of weld blockage of the refrigerant heat exchange flow channel 34.

By adopting the aforementioned technical solution, the material accommodating grooves 3122 can reduce the welding area of the welding portion 312, and the material accommodating grooves 3122 extend along the refrigerant heat exchange flow channel 34, which at least reduces the risk of weld blockage of the refrigerant heat exchange flow channel 34 within its length range, thereby providing relatively good anti-weld-blockage effects.

With continued reference to FIG. 5, in some embodiments, a width of the material accommodating groove 3122 is 5 mm-20 mm, and/or a depth of the material accommodating groove 3122 is 2 mm-3 mm.

The material accommodating groove 3122 may also be referred to as a false flow channel, and no refrigerant needs to flow in the material accommodating groove 3122. The width of the material accommodating groove 3122 is 5 mm-20 mm. For example, the width of the material accommodating groove 3122 may be 5 mm, 8 mm, 10 mm, 15 mm, 20 mm, etc. The width of the material accommodating groove 3122 may be equal to or different from the width of the refrigerant heat exchange flow channel 34, and no limitation is imposed herein. The width of the material accommodating groove 3122 being greater than or equal to 5 mm can enable the material accommodating groove 3122 to accommodate a relatively large amount of solder and effectively separate the refrigerant heat exchange flow channel 34 from a region having a relatively large welding width; the width of the material accommodating groove 3122 being less than or equal to 20 mm can enable adaption to the overall size of the refrigerant heat exchange component 30.

The depth of the material accommodating groove 3122 is 2 mm, 2.5 mm, 2.6 mm, 2.7 mm, 2.8 mm, 3 mm, etc. By setting the depth of the material accommodating groove 3122 to be greater than or equal to 2 mm, the material accommodating groove 3122 can accommodate a relatively large amount of solder; the depth of the material accommodating groove 3122 being less than or equal to 3 mm can enable adaption to the overall size of the refrigerant heat exchange component 30, thereby preventing the refrigerant heat exchange component 30 from being excessively thick and occupying too much space.

In other embodiments, the width of the material accommodating groove 3122 may also be in other ranges, so as to adapt to the size of the refrigerant heat exchange component 30 and the requirement of anti-weld-blockage.

By adopting the aforementioned technical solution, the size of the material accommodating groove 3122 can adapt to the requirement of anti-weld-blockage and match the size of the refrigerant heat exchange component 30, making it easy to implement.

In some embodiments, a width of the refrigerant heat exchange flow channel 34 is 5 mm-20 mm, and/or a depth of the refrigerant heat exchange flow channel 34 is 2 mm-3 mm.

The width of the refrigerant heat exchange flow channel 34 refers to a width on a refrigerant flow path in the refrigerant heat exchange flow channel 34, and the width of the refrigerant heat exchange flow channel 34 affects a cross-sectional flow area of the refrigerant heat exchange flow channel 34. In some embodiments, the width W1 of the refrigerant heat exchange flow channel 34 may be 5 mm, 8 mm, 10 mm, 15 mm, 20 mm, etc. The width of the refrigerant heat exchange flow channel 34 being greater than or equal to 5 mm can enable the refrigerant heat exchange flow channel 34 to have a sufficient flow rate of refrigerant; the width of the refrigerant heat exchange flow channel 34 being less than or equal to 20 mm can prevent a working pressure of the refrigerant from being excessively large and affecting the structural reliability of the refrigerant heat exchange component 30.

The depth of the refrigerant heat exchange flow channel 34 may be 2 mm, 2.5 mm, 2.7 mm, 3 mm, etc. By setting the depth of the refrigerant heat exchange flow channel 34 to be greater than or equal to 2 mm, the refrigerant heat exchange flow channel 34 can have a sufficient flow rate of refrigerant; the depth of the refrigerant heat exchange flow channel 34 being less than or equal to 3 mm can prevent the working pressure of the refrigerant from being excessively large and affecting the structural reliability of the refrigerant heat exchange component 30.

If the flow channel portion 311 and the material accommodating groove 3122 are both recessed in a surface of the first plate body 31 facing the second plate body 32, and the flow channel portion 311 and the material accommodating groove 3122 are fabricated on the first plate body 31 by means of stamping, and bottoms of the refrigerant heat exchange flow channel 34 and the material accommodating groove 3122 will be provided to protrude relative to the first plate body 31; by setting the depths of the refrigerant heat exchange flow channel 34 and the material accommodating groove 3122 to be less than or equal to 3 mm, the protrusion heights of the refrigerant heat exchange flow channel 34 and the material accommodating groove 3122 can be controlled, thereby reducing the overall size of the refrigerant heat exchange component 30 and adapting to installation requirements.

By setting the refrigerant heat exchange flow channel 34 to meet the aforementioned conditions, the refrigerant heat exchange flow channel 34 can to enabled to have a sufficient flow rate of refrigerant and an excessive working pressure will not occur. In addition, the width of the material accommodating groove 3122 may be equal to or close to the width of the refrigerant heat exchange flow channel 34, and the depth of the material accommodating groove 3122 may be equal to or close to the depth of the refrigerant heat exchange flow channel 34, so that the material accommodating groove 3122 is convenient to manufacture and occupies relatively small space.

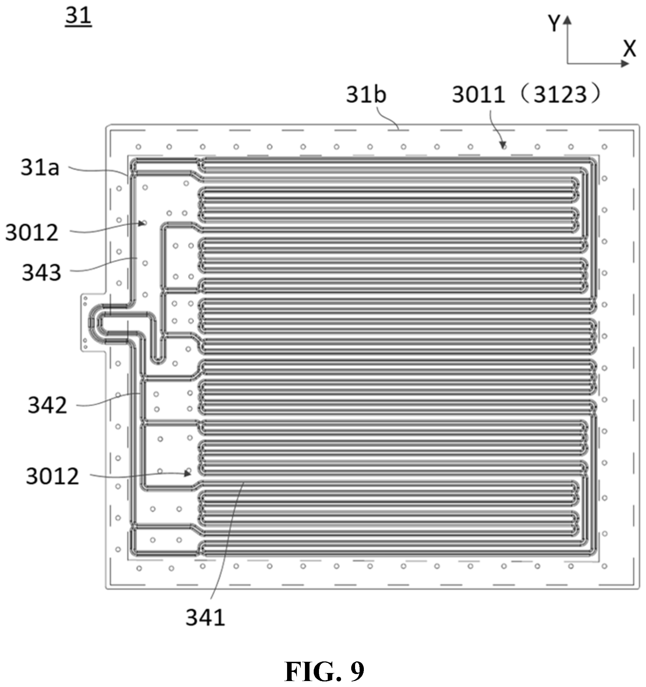

Referring to FIG. 9 to FIG. 11, in some embodiments, a through hole 3123 is provided in the welding portion 312, with the interior of the through hole 3123 forming the material accommodating space 301.

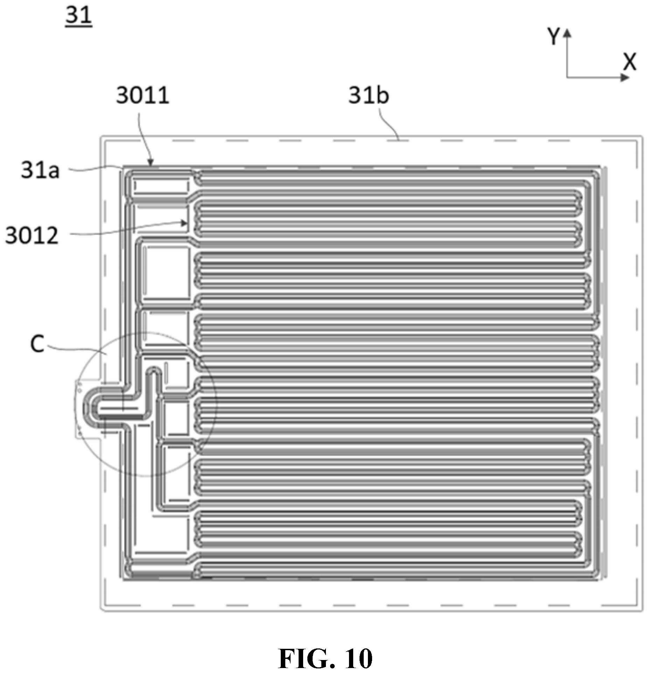

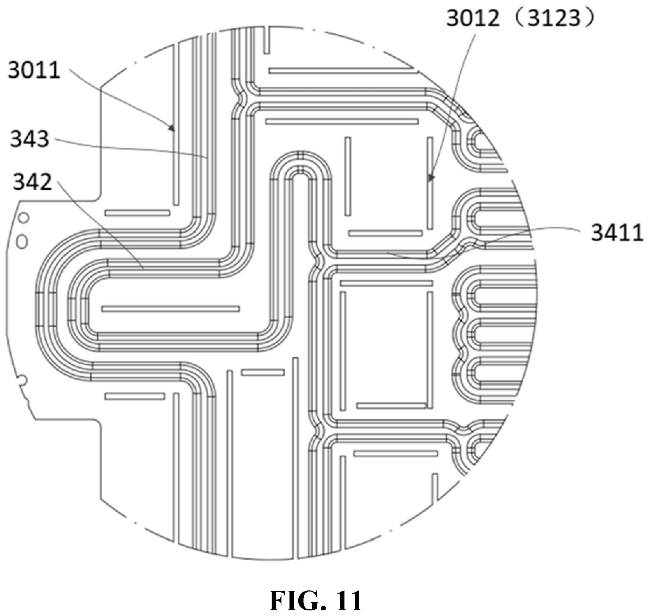

The through hole 3123 is a hole penetrating the first plate body 31 along a thickness direction of the first plate body 31. By way of example, as shown in FIG. 9, the through hole 3123 is a circular hole. As shown in FIG. 10 and FIG. 11, the through hole 3123 is an elongated hole, for example, the through hole 3123 may be a slit-shaped elongated hole.

The number of through holes 3123 may be one or more. By way of example, the number of the through holes 3123 is a plurality, the plurality of through holes 3123 being distributed at intervals at an outer side of the refrigerant heat exchange flow channel 34 and between flow channel portions 311 in the refrigerant heat exchange flow channel 34 that are relatively far apart from each other.

By providing the through holes 3123 in the welding portion 312, the through holes 3123 can separate the refrigerant heat exchange flow channel 34 from a welding region having a relatively large welding width, and the through holes 3123 can accommodate and/or discharge excess solder, thereby further reducing the risk of weld blockage. In addition, the through holes 3123 can also discharge gas between the first plate body 31 and the second plate body 32 during the welding process, achieving an anti-gas-trapping effect.

It should be noted that, in some embodiments, the through holes 3123 can be filled or partially filled with the solder, which does not affect the anti-weld-blockage effect achieved by the through holes 3123 during the welding process.

As shown in FIG. 9, in some embodiments, the through holes 3123 are circular, and the hole diameters of the through holes 3123 are 3 mm-15 mm.

The through holes 3123 are circular through holes 3123, and the hole diameters of the through holes 3123 may be equal or unequal. For example, a through hole 3123 with a relatively large hole diameter is provided in a region where the connection area between the first plate body 31 and the second plate body 32 is relatively large.

The hole diameters of the through holes 3123 may be 3 mm, 5 mm, 6 mm, 8 mm, 10 mm, 15 mm, etc. The hole diameters of the through holes 3123 being greater than or equal to 3 mm facilitates utilizing the through holes 3123 to separate the refrigerant heat exchange flow channel 34 from a welding region with a relatively large width; in a case where the hole diameters of the through holes 3123 are less than or equal to 15 mm, on the one hand, the size of the through holes 3123 can adapt to the size of the refrigerant heat exchange component 30, and on the other hand, the through holes 3123 have relatively small influence on the structural strength of the refrigerant heat exchange component 30.

In other embodiments, the through holes 3123 may also be of other shapes such as a square, an ellipse, etc.

Referring to FIG. 5 to FIG. 11, in some embodiments, at least one of a material accommodating groove 3122 and a through hole 3123 is provided in the welding portion 312, and the material accommodating space 301 is formed in the material accommodating groove 3122 and/or the through hole 3123.

Specifically, the number of the material accommodating spaces 301 may be plural, and the material accommodating spaces 301 may be formed by the material accommodating grooves 3122 or the through holes 3123. For example, since an edge region of the refrigerant heat exchange component 30 often needs to be in contact with a bottom protection plate or the box 10, there may not be sufficient space to provide the material accommodating groove 3122. In this case, through holes 3123 may be provided in a certain region to block the flow of the solder, and when space permits, the material accommodating grooves 3122 are preferentially provided, and when space is insufficient, the through holes 3123 are provided as an auxiliary; and in a region with a relatively large welding width, elongated through holes 3123 (or referred to as slot holes) is provided to block the flow of the solder.

By adopting the aforementioned technical solution, the refrigerant heat exchange component 30 can be provided with the material accommodating groove 3122 and/or the through hole 3123 according to its installation requirements, dimensions and other conditions, and the material accommodating groove 3122 and the through hole 3123 can be used in combination to achieve the anti-weld-blockage effect.

Referring to FIG. 4 to FIG. 11, in some embodiments, the first plate body 31 has a flow channel region 31a and a peripheral region 31b disposed outside the flow channel region 31a, the refrigerant heat exchange flow channel 34 being located in the flow channel region 31a, and the welding portion 312 is disposed in both the flow channel region 31a and the peripheral region 31b; and the material accommodating space 301 includes a first material accommodating space 3011, the first material accommodating space 3011 being disposed in the peripheral region 31b.

The flow channel region 31a is a region where the refrigerant heat exchange flow channel 34 is located, and is also a complete region. For convenience of illustration, the flow channel region 31a is schematically shown using a circle of dashed line in FIG. 5, where a flow channel inlet and a flow channel outlet may be within the flow channel region 31a or outside the flow channel region 31a, which is not limited in the present application. FIG. 5 also schematically shows an edge of the welding portion 312 using a circle of dashed line, where the edge of the welding portion 312 may be close to an edge of the first plate body 31 or may coincide with the edge of the first plate body 31, which is not limited in the present application.

The peripheral region 31b is a region disposed outside the flow channel region 31a, and the welding portion 312 is disposed in both the flow channel region 31a and the peripheral region 31b. The welding portion 312 refers to a portion on the first plate body 31 used for welding with the second plate body 32, a portion of the welding portion 312 located in the flow channel region 31a can separate different flow channel portions 311 of the refrigerant heat exchange flow channel 34, and a portion of the welding portion 312 located in the peripheral region 31b can sealingly connect the first plate body 31 and the second plate body 32.

The material accommodating space 301 includes the first material accommodating space 3011 disposed in the peripheral region 31b. The number of the first material accommodating spaces 3011 may be one or more, for example, a plurality of first material accommodating spaces 3011 extend along an edge of the flow channel region 31a.

The material accommodating space 301 includes the first material accommodating space 3011 disposed in the peripheral region 31b. Since a welding width of the peripheral region 31b is relatively large, the first material accommodating space 3011 is disposed in the peripheral region 31b, which can separate a portion of the peripheral region 31b having a relatively large welding width from the refrigerant heat exchange flow channel 34, thereby reducing the risk of weld blockage of the refrigerant heat exchange flow channel 34.

In some embodiments, along a length direction of the first plate body 31, the first material accommodating space 3011 is disposed at one side of the first plate body 31, with a distance from the first material accommodating space 3011 to the refrigerant heat exchange flow channel 34 less than a distance from the first material accommodating space 3011 to an edge of the first plate body 31; and/or along a width direction of the first plate body 31, the first material accommodating space 3011 is disposed at one side of the first plate body 31, with a distance from the first material accommodating space 3011 to the refrigerant heat exchange flow channel 34 less than a distance from the first material accommodating space 3011 to the edge of the first plate body 31.

Referring to FIG. 5, the length direction of the first plate body 31 is the X direction, and the width direction of the first plate body 31 is the Y direction. Along the length direction of the first plate body 31, the first material accommodating space 3011 is disposed at one side of the first plate body 31, with the distance from the first material accommodating space 3011 to the refrigerant heat exchange flow channel 34 less than the distance from the first material accommodating space 3011 to the edge of the first plate body 31, i.e., the first material accommodating space 3011 is closer to the refrigerant heat exchange flow channel 34.

Similarly, along the width direction of the first plate body 31, the first material accommodating space 3011 is disposed at one side of the first plate body 31, with the distance from the first material accommodating space 3011 to the refrigerant heat exchange flow channel 34 less than the distance from the first material accommodating space 3011 to the edge of the first plate body 31, i.e., the first material accommodating space 3011 is closer to the refrigerant heat exchange flow channel 34.

By adopting the aforementioned technical solution, the distance between the first material accommodating space 3011 and the refrigerant heat exchange flow channel 34 is relatively short, which can separate the refrigerant heat exchange flow channel 34 from a region having a relatively large welding width at the periphery of the exchange plate, thereby providing relatively good anti-weld-blockage effects.

In some embodiments, the first material accommodating space 3011 extends along an edge of the flow channel region 31a; and/or the number of first material accommodating spaces 3011 is a plurality, the plurality of first material accommodating spaces 3011 being arranged along the edge of the flow channel region 31a.

The first material accommodating space 3011 may be circular, square, elliptical, elongated, and the like. Optionally, as shown in FIG. 5 and FIG. 11, the first material accommodating space 3011 is formed by a strip-shaped material accommodating groove 3122 or an strip-shaped through hole 3123, the first material accommodating space 3011 is in a strip shape, and the first material accommodating space 3011 extends along the edge of the flow channel region 31a. Optionally, as shown in FIG. 5 to FIG. 9, a plurality of first material accommodating spaces 3011 are arranged along the edge of the flow channel region 31a.

By adopting the aforementioned technical solution, the first material accommodating space 3011 can be arranged along the extending direction of the refrigerant heat exchange flow channel 34, so as to adapt to the length of the refrigerant heat exchange flow channel 34, thereby providing a relatively comprehensive anti-weld-blockage effect for the refrigerant heat exchange flow channel 34.

With continued reference to FIG. 5 to FIG. 11, in some embodiments, the material accommodating space 301 further includes one or more second material accommodating spaces 3012, the second material accommodating space 3012 being disposed in the flow channel region 31a.

The refrigerant heat exchange flow channel 34 may be arrangement in various manners, and the refrigerant heat exchange flow channel 34 forms a plurality of flow channel branches. In some embodiments, the distance between adjacent flow channel branches is relatively large, which increases the risk of weld blockage. For this reason, the embodiments of the present application provide one or more second material accommodating spaces 3012 in the flow channel region 31a, so that excess solder can be blocked from flowing toward the interior of the refrigerant heat exchange flow channel 34, which also achieves the anti-weld-blockage effect.

Referring to FIG. 4 and FIG. 5, in some embodiments, the refrigerant heat exchange flow channel 34 includes a plurality of branch flow channels 341 arranged in parallel, the branch flow channels 341 each including an inlet sub-branch flow channel 3411, a return sub-branch flow channel 3412, and a plurality of sub-flow channels 3413 connected between the inlet sub-branch flow channel 3411 and the return sub-branch flow channel 3412, where the plurality of sub-flow channels 3413 are connected in sequence, and the sub-flow channels 3413 extend along a first direction and the plurality of sub-flow channels 3413 are arranged along a second direction, the second direction intersecting the first direction; and the inlet sub-branch flow channel 3411 and/or the return sub-branch flow channel 3412 is disposed adjacent to the second material accommodating space 3012.

The plurality of branch flow channels 341 are arranged in parallel, so that the plurality of branch flow channels 341 can each independently supply refrigerant for circulating flow. The refrigerant heat exchange component 30 has a flow channel inlet and a flow channel outlet, and each branch flow channel 341 is in communication with the flow channel inlet and the flow channel outlet. In some embodiments, the refrigerant heat exchange component 30 further includes a heat exchange connector 33, where the heat exchange connector 33 is connected to at least one of the first plate body 31 and the second plate body 32, the heat exchange connector 33 is in communication with the flow channel inlet and the flow channel outlet, and the heat exchange connector 33 is used for connecting the refrigerant heat exchange component 30 to other heat exchange devices, so as to allow the refrigerant to flow in and flow out.

Each branch flow channel 341 includes an inlet sub-branch flow channel 3411, a return sub-branch flow channel 3412, and a plurality of sub-flow channels 3413. The refrigerant entering the refrigerant heat exchange component 30 from the flow channel inlet flows from the inlet sub-branch flow channel 3411 through the plurality of sub-flow channels 3413 in sequence, and then enters the return sub-branch flow channel 3412 to flow toward the flow channel outlet. The plurality of sub-flow channels 3413 are arranged side by side, and the heat exchange effect on the battery cell assembly 20 is relatively good; the sub-flow channels 3413 extend along the first direction and the plurality of sub-flow channels 3413 are arranged along the second direction, where the first direction may be a direction in which the plurality of battery cells 21 in the battery cell assembly 20 are arranged, the first direction is the X direction in the figure, and the second direction may be perpendicular to the first direction, and the second direction is the Y direction in the figure. Optionally, the sub-flow channels 3413 may further include a plurality of parallel sub-flow channels 3413 to improve the reliability of heat exchange and increase the heat exchange area. Since the arrangement of the sub-flow channels 3413 is relatively dense, the risk of weld blockage occurring in the sub-flow channels 3413 is relatively small.

The inlet sub-branch flow channel 34113411 and the return sub-branch flow channel 3412 are arranged at intervals in the flow channel region 31a, and a region with a large welding width may exist between the sub-branch flow channels. For this reason, in the present application, the second material accommodating space 3012 is disposed adjacent to the inlet sub-branch flow channel 3411 and/or the return sub-branch flow channel 3412, so as to reduce the risk of weld blockage occurring in the inlet sub-branch flow channel 3411 and/or the return sub-branch flow channel 3412. In addition, if weld blockage occurs in the inlet sub-branch flow channel 34113411 and the return sub-branch flow channel 3412, the entire branch flow channel 341 will be affected, which reduces the reliability of thermal management. By providing the second material accommodating space 3012 disposed adjacent to the inlet sub-branch flow channel 34113411 and the return sub-branch flow channel 3412, a key portion of the refrigerant heat exchange flow channel 34 can be protected preferentially, improving the reliability of the refrigerant heat exchange component 30.

In some embodiments, a plurality of the second material accommodating spaces 3012 are provided between at least two adjacent inlet sub-branch flow channels 3411; and/or a plurality of the second material accommodating spaces 3012 are provided between the inlet sub-branch flow channel 3411 and the return sub-branch flow channel 3412.

As shown in FIG. 4 and FIG. 5, the number of the second material accommodating spaces 3012 may be plural. For example, if there is a relatively large welding width between two adjacent inlet sub-branch flow channels 3411, a plurality of second material accommodating spaces 3012 are provided therebetween, and each second material accommodating space 3012 is disposed adjacent to at least one inlet sub-branch flow channel 3411.

During the flow of the refrigerant, the refrigerant exchanges heat with the battery cells 21, which may cause the refrigerant in the return sub-branch flow channel 3412 to have a relatively high temperature; therefore, in the embodiments of the present application, the return sub-branch flow channel 3412 is disposed at an edge position of the flow channel region 31a. Optionally, at least one return sub-branch flow channel 3412 may be staggered with respect to the battery cell assembly 20.

Since the return sub-branch flow channel 3412 is disposed at the edge position of the flow channel region 31a, a region with a relatively large welding width may exist between the inlet sub-branch flow channel 3411 and the return sub-branch flow channel 3412. In this case, a plurality of second material accommodating spaces 3012 are provided therebetween, each second material accommodating space 3012 being disposed adjacent to the inlet sub-branch flow channel 3411 and/or the return sub-branch flow channel 3412.

By adopting the aforementioned technical solution, the refrigerant heat exchange component 30 can be flexibly provided with a plurality of second material accommodating spaces 3012 to reduce the risk of weld blockage occurring in the inlet sub-branch flow channel 3411 and the return sub-branch flow channel 3412, thereby improving the welding yield and reliability of the refrigerant heat exchange component 30.

As shown in FIG. 4 and FIG. 5, in some embodiments, the refrigerant heat exchange flow channel 34 further includes a main inlet flow channel 342 and a main return flow channel 343, the main inlet flow channel 342 being in communication with a plurality of inlet sub-branch flow channels 3411, and the main return flow channel 343 being in communication with a plurality of return sub-branch flow channels 3412; and the main inlet flow channel 342 and/or the main return flow channel 343 is disposed adjacent to the second material accommodating space 3012.

The main inlet flow channel 342 can distribute the refrigerant to the plurality of inlet sub-branch flow channels 3411, and the main return flow channel 343 can collect the refrigerant flowing out of the plurality of return sub-branch flow channels 3412. Therefore, the main inlet flow channel 342 and the main return flow channel 343 are relatively critical, and if weld blockage occurs, the function of the entire refrigerant heat exchange component 30 will be disabled. For this reason, the embodiments of the present application provide the second material accommodating space 3012 disposed adjacent to the main inlet flow channel 342 and/or the main return flow channel 343, so as to reduce the risk of weld blockage occurring in the main inlet flow channel 342 and/or the main return flow channel 343, thereby improving the welding yield and reliability of the refrigerant heat exchange component 30.

Referring to FIG. 8, FIG. 8 is a cross-sectional schematic view of a partial structure of the refrigerant heat exchange component 30, specifically a cross-sectional schematic view of the refrigerant heat exchange component 30 cut along the refrigerant heat exchange flow channel 34 and the material accommodating space 301. In some embodiments, the first plate body 31 includes a body portion 313 and a composite layer 314 disposed on a surface of the body portion 313, the composite layer 314 serving as solder for welding with the second plate body 32, and the material accommodating space 301 being capable of accommodating the solder.

The body portion 313 may be made of a metal material, and a melting point of the composite layer 314 is lower than a melting point of the body portion 313. For example, the composite layer 314 may be an aluminum layer. The first plate body 31 and the second plate body 32 may be welded by means of brazing. During welding, a brazing layer is first coated on a surface of the first plate body 31, then the first plate body 31 and the second plate body 32 are stacked and welded, and the composite layer 314, as the solder, can fixedly connect the first plate body 31 and the second plate body 32.

The material accommodating space 301 can accommodate a portion of excess solder, so as to block the solder from flowing toward the interior of the refrigerant heat exchange flow channel 34, thereby reducing the risk of weld blockage occurring in the refrigerant heat exchange flow channel 34.

In other embodiments, a composite layer 314 may also be provided on a surface of the second plate body 32, and the composite layer 314 on the second plate body 32 may also serve as the solder, and the material accommodating space 301 can likewise accommodate excess solder.

In other embodiments, the first plate body 31 and the second plate body 32 may also be welded using other solder, and the accommodating space can likewise accommodate the solder.

In some embodiments, the box 10 includes a box body 12 and an upper cover 11, two ends of the box body 12 being each provided with an opening, where the upper cover 11 and the refrigerant heat exchange component 30 respectively cover the openings at the two ends of the box body 12, and the refrigerant heat exchange component 30 is bonded to the battery cell assembly 20 by means of a thermally conductive adhesive.

The refrigerant heat exchange component 30 is disposed at bottoms of the box 10 and the plurality of battery cell assemblies 20, and the refrigerant heat exchange component 30 can be used as a bottom plate of the box 10, simplifying the structure of the battery apparatus 100 and helping to save space of the vehicle.

The refrigerant heat exchange component 30 is bonded to the battery cell assembly 20 by means of the thermally conductive adhesive, so that the refrigerant heat exchange component 30 can directly exchange heat with the battery cell assembly 20, which provides high heat exchange efficiency and good heat exchange effects, thereby effectively improving the reliability of the battery apparatus 100.

The battery apparatus 100 further includes a bottom protection plate 40, the bottom protection plate 40 being connected to a side of the refrigerant heat exchange component 30 facing away from the box body 12. The bottom protection plate can play a protective role for the refrigerant heat exchange component 30, reducing a collision force on the refrigerant heat exchange component 30 during use of the electrical apparatus, so that the refrigerant heat exchange component 30 is not prone to the problem of collision deformation.

In other embodiments, the refrigerant heat exchange component 30 may also be disposed inside or outside the box body 12, as long as it can exchange heat with the battery cell assembly 20.

In some embodiments, the refrigerant in the refrigerant heat exchange flow channel is a phase change working medium.

The refrigerant may be a phase change working medium, and during the flow of the refrigerant, the refrigerant may be in a gas-liquid two-phase state. The type of the refrigerant may be R134A (tetrafluoroethane), R1234YF (tetrafluoropropene), R1233ZD (monochlorotrifluoropropene), and the like.

The refrigerant heat exchange component 30 uses a refrigerant for heat exchange, and the refrigerant heat exchange component 30 may be a direct cooling plate. The direct cooling plate has the advantage of high heat exchange efficiency, and at the same time, the direct cooling plate has a relatively high requirement on structural strength and welding performance. The refrigerant heat exchange component 30 according to the embodiments of the present application is internally provided with the material accommodating space 301, which can greatly reduce the risk of welding blockage, thereby improving the manufacturing yield of the refrigerant heat exchange component 30.

In some embodiments, the battery apparatus 100 includes a box 10, a battery cell assembly 20, and a refrigerant heat exchange component 30, the battery cell assembly 20 being disposed within the box 10, the refrigerant heat exchange component 30 being connected to the box 10, and the refrigerant heat exchange component 30 including a first plate body 31 and a second plate body 32 arranged in a stack, where the first plate body 31 and the second plate body 32 enclose a refrigerant heat exchange flow channel 34, the first plate body 31 has a welding portion 312 and a material accommodating space 301 is provided in the welding portion 312, the material accommodating space 301 being disposed adjacent to the refrigerant heat exchange flow channel 34, an opening of the material accommodating space 301 facing the second plate body 32, and the second plate body 32 being weldedly connected to the welding portion 312. At least one of a material accommodating groove 3122 and a through hole 3123 is provided in the welding portion 312, and the material accommodating space 301 is formed in the material accommodating groove 3122 and/or the through hole 3123. The first plate body 31 has a flow channel region 31a and a peripheral region 31b disposed outside the flow channel region 31a, and the material accommodating space 301 includes a first material accommodating space 3011 provided in the peripheral region 31b, and/or a second material accommodating space 3012 provided in the flow channel region 31a. The battery apparatus 100 according to the embodiments of the present application reduces the risk of weld blockage occurring in the refrigerant heat exchange component 30, improves the welding yield of the refrigerant heat exchange component 30, reduces the manufacturing cost of the refrigerant heat exchange component 30, and improves the reliability of thermal management and the reliability of the battery apparatus 100.

Embodiments of a second aspect of the present application provide a refrigerant heat exchange component 30, the refrigerant heat exchange component 30 at least including a first plate body 31 and a second plate body 32 arranged in a stack, where the first plate body 31 and the second plate body 32 enclose a refrigerant heat exchange flow channel 34, the first plate body 31 has a welding portion 312, the second plate body 32 is weldedly connected to the welding portion 312, and a material accommodating space 301 is provided in the welding portion 312, the material accommodating space 301 having an opening facing the second plate body 32, and the material accommodating space 301 being disposed adjacent to the refrigerant heat exchange flow channel 34 to block the solder from flowing toward the interior of the refrigerant heat exchange flow channel 34.

The refrigerant heat exchange component 30 according to the embodiments of the present application may be the refrigerant heat exchange component in any one of the embodiments of the first aspect.

The refrigerant heat exchange component 30 according to the embodiments of the present application includes a first plate body 31 and a second plate body 32. By providing the material accommodating space 301, the contact area between the first plate body 31 and the second plate body 32 is reduced, and the welding area is correspondingly reduced; meanwhile, the material accommodating space 301 blocks a path of the solder moving toward the refrigerant heat exchange flow channel 34, and the material accommodating space 301 can further store excess solder. The solution according to the embodiments of the present application reduces the occurrence of the problem of blockage caused by the solder flowing into the refrigerant heat exchange flow channel 34, thereby reducing the risk of functional abnormality of the refrigerant heat exchange component 30 due to blockage of the refrigerant heat exchange flow channel 34, improving the welding yield of the refrigerant heat exchange component 30, and reducing the cost of the refrigerant heat exchange component 30.

Embodiments of a third aspect of the present application provide an electrical apparatus, including the battery apparatus 100 according to the first aspect or the refrigerant heat exchange component 30 according to the second aspect, the battery apparatus 100 being used for providing electric energy.

The electrical apparatus may be any one of the aforementioned devices or systems to which the battery apparatus 100 is applied.

The above embodiments are merely used for describing the technical solutions of the present application, instead of limiting the present application; although the present application is described in detail with reference to the foregoing embodiments, those of ordinary skill in the art should understand that: they can still make modifications on the technical solutions described in the foregoing embodiments, or perform equivalent replacements on a part of technical features thereof; and these modifications or replacements are not intended to make the essences of the corresponding technical solutions depart from the spirit and scope of the technical solutions of the embodiments of the present application, but should all be encompassed within the scope of protection of the present application.

## Claims

1. A battery apparatus, comprising:
a box;
a battery cell assembly disposed within the box; and
a refrigerant heat exchange component, the refrigerant heat exchange component being configured to perform heat exchange with the battery cell assembly, and the refrigerant heat exchange component at least comprising a first plate body and a second plate body arranged in a stack, wherein the first plate body and the second plate body enclose a refrigerant heat exchange flow channel, the first plate body has a welding portion, the second plate body is weldedly connected to the welding portion, and a material accommodating space is provided in the welding portion, the material accommodating space having an opening facing the second plate body, and the material accommodating space being disposed adjacent to the refrigerant heat exchange flow channel to block the solder from flowing toward the interior of the refrigerant heat exchange flow channel.

2. The battery apparatus of claim 1, wherein
the welding portion comprises a plurality of connection regions arranged at intervals, the material accommodating space being provided in at least one of the connection regions; and
at one side of the refrigerant heat exchange flow channel, the material accommodating space divides the connection region into a first region and a second region distributed along a preset direction, wherein the first region is located between the refrigerant heat exchange flow channel and the material accommodating space, and the material accommodating space is used for blocking the solder from flowing from the second region to the first region.

3. The battery apparatus of claim 2, wherein along the preset direction, a width of the first region is less than or equal to a width of the second region.

4. The battery apparatus of any one of claims 1 to 3, wherein a surface of the first plate body facing the second plate body is recessed to provide a flow channel portion, and the flow channel portion and the second plate body enclose the refrigerant heat exchange flow channel.

5. The battery apparatus of any one of claims 1 to 4, wherein
there is a preset distance between the material accommodating space and a portion of the refrigerant heat exchange flow channel disposed adjacent thereto, the preset distance being less than or equal to 35 mm.

6. The battery apparatus of claim 5, wherein the preset distance ranges from 5 mm to 20 mm.

7. The battery apparatus of any one of claims 1 to 6, wherein a material accommodating groove is provided in the welding portion, with the interior of the material accommodating groove forming the material accommodating space.

8. The battery apparatus of claim 7, wherein the material accommodating groove is in a strip shape, and the material accommodating groove extends along a portion of the refrigerant heat exchange flow channel adjacent thereto.

9. The battery apparatus of claim 7 or 8, wherein a width of the material accommodating groove is 5 mm-20 mm, and/or a depth of the material accommodating groove is 2 mm-3 mm.

10. The battery apparatus of any one of claims 1 to 9, wherein a width of the refrigerant heat exchange flow channel is 5 mm-20 mm, and/or a depth of the refrigerant heat exchange flow channel is 2 mm-3 mm.

11. The battery apparatus of any one of claims 1 to 10, wherein a through hole is provided in the welding portion, with the interior of the through hole forming the material accommodating space.

12. The battery apparatus of claim 11, wherein the through hole is circular, and a hole diameter of the through hole is 3 mm-15 mm.

13. The battery apparatus of any one of claims 1 to 12, wherein at least one of the material accommodating groove and the through hole is provided in the welding portion, and the material accommodating space is formed in the material accommodating groove and/or the through hole.

14. The battery apparatus of any one of claims 1 to 13, wherein the first plate body has a flow channel region and a peripheral region disposed outside the flow channel region, the refrigerant heat exchange flow channel being located in the flow channel region, and the welding portion being disposed in both the flow channel region and the peripheral region; and
the material accommodating space comprises a first material accommodating space, the first material accommodating space being disposed in the peripheral region.

15. The battery apparatus of claim 14, wherein
along a length direction of the first plate body, the first material accommodating space is disposed at one side of the first plate body, with a distance from the first material accommodating space to the refrigerant heat exchange flow channel less than a distance from the first material accommodating space to an edge of the first plate body; and/or
along a width direction of the first plate body, the first material accommodating space is disposed at one side of the first plate body, with a distance from the first material accommodating space to the refrigerant heat exchange flow channel less than a distance from the first material accommodating space to the edge of the first plate body.

16. The battery apparatus of claim 14 or 15, wherein
the first material accommodating space extends along an edge of the flow channel region; and/or
a plurality of the first material accommodating spaces are provided, the plurality of first material accommodating spaces being arranged along the edge of the flow channel region.

17. The battery apparatus of any one of claims 14 to 16, wherein the material accommodating space further comprises one or more second material accommodating spaces, the second material accommodating spaces being disposed in the flow channel region.

18. The battery apparatus of claim 17, wherein the refrigerant heat exchange flow channel comprises a plurality of branch flow channels arranged in parallel, the branch flow channels each comprising an inlet sub-branch flow channel, a return sub-branch flow channel, and a plurality of sub-flow channels connected between the inlet sub-branch flow channel and the return sub-branch flow channel, wherein the plurality of sub-flow channels are connected in sequence, and the sub-flow channels extend along a first direction and the plurality of sub-flow channels are arranged along a second direction, the second direction intersecting the first direction; and
the inlet sub-branch flow channel and/or the return sub-branch flow channel is disposed adjacent to the second material accommodating space.

19. The battery apparatus of claim 18, wherein a plurality of the second material accommodating spaces are provided between at least two adjacent inlet sub-branch flow channels; and/or,
a plurality of the second material accommodating spaces are provided between the inlet sub-branch flow channel and the return sub-branch flow channel.

20. The battery apparatus of claim 18 or 19, wherein the refrigerant heat exchange flow channel further comprises a main inlet flow channel and a main return flow channel, the main inlet flow channel being in communication with a plurality of the inlet sub-branch flow channels, and the main return flow channel being in communication with a plurality of the return sub-branch flow channels; and
the main inlet flow channel and/or the main return flow channel is disposed adjacent to the second material accommodating space.

21. The battery apparatus of any one of claims 1 to 20, wherein the first plate body comprises a body portion and a composite layer disposed on a surface of the body portion, the composite layer serving as solder for welding with the second plate body, and the material accommodating space being capable of accommodating the solder.

22. The battery apparatus of any one of claims 1 to 20, wherein the box comprises a box body and an upper cover, two ends of the box body being each provided with an opening, wherein the upper cover and the refrigerant heat exchange component respectively cover the openings at the two ends of the box body, and the refrigerant heat exchange component is bonded to the battery cell assembly by means of a thermally conductive adhesive.

23. The battery apparatus of any one of claims 1 to 22, wherein a refrigerant in the refrigerant heat exchange flow channel is a phase change working medium.

24. A refrigerant heat exchange component, wherein the refrigerant heat exchange component at least comprises a first plate body and a second plate body arranged in a stack, the first plate body and the second plate body enclosing a refrigerant heat exchange flow channel, the first plate body having a welding portion, the second plate body being weldedly connected to the welding portion, and a material accommodating space being provided in the welding portion, wherein the material accommodating space has an opening facing the second plate body, and the material accommodating space is disposed adjacent to the refrigerant heat exchange flow channel to block the solder from flowing toward the interior of the refrigerant heat exchange flow channel.

25. An electrical apparatus, comprising the battery apparatus of any one of claims 1 to 23, the battery apparatus being used for providing electric energy.
